# EUROPÄISCHE PATENTANMELDUNG

(11) **EP 3 357 552 A1**
(43) Veröffentlichungstag der Anmeldung: **08.08.2018**
(21) Anmeldenummer: 18152025.5
(22) Anmeldetag: 17.01.2018
(51) Int. Cl.: A63H 33/00, C08L 3/02, C08L 91/00

(54) **VERFAHREN UND SET ZUM DEKORIEREN EINER GLATTEN FLÄCHE MITTELS KNETMASSE SOWIE VERWENDUNG EINER KNETMASSE FÜR EIN DEKORATIONSOBJEKT**

(30) Priorität: 24.01.2017 DE 102017201090
(71) Anmelder: Feuchtmann GmbH, 91593 Burgbernheim (DE)
(72) Erfinder: Feuchtmann, Ulrich, 91489 Wilhelmsdorf (DE)
(74) Vertreter: Rau, Schneck & Hübner Patentanwälte Rechtsanwälte PartGmbB

(57) **Zusammenfassung**

Ein Verfahren zum Dekorieren einer glatten Fläche umfasst die Verfahrensschritte Bereitstellen von wasserfreier Knetmasse, wobei die Knetmasse Wachs, Öl und Stärke enthält und gesundheitlich unbedenklich ist, Formen der Knetmasse zu einem Dekorationsobjekt, Anbringen des Dekorationsobjekts an der glatten Fläche, die transparent ist, Abnehmen des Dekorationsobjekts von der transparenten Fläche, Wiederverwenden des Dekorationsobjekts als Knetmasse zum erneuten Dekorieren einer transparenten Fläche.

## Beschreibung

Die vorliegende Patentanmeldung nimmt die Priorität der deutschen Patentanmeldung DE 10 2017 201 090.8 in Anspruch, deren Inhalt durch Bezugnahme hierin aufgenommen wird.

Die Erfindung betrifft ein Verfahren und ein Set zum Dekorieren einer glatten Fläche sowie die Verwendung einer Knetmasse für ein Dekorationsobjekt.

Aus DE 10 2005 011 692 A1 und DE 10 2007 045 590 A1 sind Modelliermassen bekannt, die plastisch verformbar und aushärtenbar sind. Diese Massen sind nicht wiederverwendbar.

Die US 3,097,446 offenbart eine Modelliermasse mit einer Rezeptur, die verschiedenen Weichmacher umfasst. Weichmacher sind gesundheitlich bedenklich.

Zum Dekorieren einer glatten Fläche, wie beispielsweise einer Fensterscheibe, insbesondere einem Schaufenster, sind beispielsweise Fenstermalfarben bekannt. Bei der Verarbeitung von Fenstermalfarben, die auch unter der Bezeichnung "Window Color" bekannt sind, können Verunreinigungen der Fläche auftreten, die aufwendig entfernt werden müssen. Die Handhabung der Fenstermalfarben ist kompliziert. Ähnliche Produkte sind bekannt aus Small Foot by Legler / Amazon: Small Foot Company 8466 - Fensterbilder A-Ball Clay Suncatcher (im Verkauf bei Amazon seit 01.10.2013, Quelle: https://www.amazon.de/Small-Foot-Suncatcher-Fensterbildmehrfarbig/dp/B00F523IHU/ref=pd_rhf_se_p_img_4?_encoding=UTF8&psc=1&r efRID=WVCHVJ8S1K98JVZJH0V0 [abgerufen am 13.10.2017]), aus Play-Doh / Amazon: Hasbro Play-Doh B3408100 - Erste Muster und Strukturen, Knete (im Verkauf bei Amazon seit 09.01.2017, Quelle: https://www.amazon.de/Hasbro-Play-Doh-B3408100-MusterStrukturen/dp/B01N8ZMU2Y/ref=sr_1_1?s=toys&ie=UTF8&qid=1507812429&s r=1-1&keywords=erste+muster+und+strukturen+knete [abgerufen am 12.10.2017]), aus Play-Doh / Amazon: Hasbro Play-Doh B3406100 - Erste Zahlen und Zählen, Knete (im Verkauf bei Amazon seit 09.01.2017, Quelle: https://www.amazon.de/Hasbro-Play-Doh-B3406100-Zahlen-Z%C3%A4hlen/dp/B01N51O5AC/ref=sr_1_1?s=toys&ie=UTF8&qid=1507812876&sr=1-1&keywords=B3406100 [abgerufen am 12.10.2017] und aus Play-Doh / Amazon: Hasbro Play-Doh B3404100 - Erste Farben und Formen, Knete (im Verkauf bei Amazon seit 04.01.2017, Quelle: https://www.amazon.de/Hasbro-Play-Doh-B3404100-Farben-Formen/dp/B01MQIAE09/ref=sr_1_1?s=toys&ie=UTF8qid=1507813065&sr=1-1&keywords=B3404100 [abgerufen am 12.10.2017]). Die Verarbeitung der Fenstermalfarben unmittelbar an der glatten Fläche ist unergonomisch.

Der Erfindung liegt die Aufgabe zugrunde, das Dekorieren einer glatten Fläche zu verbessern.

Diese Aufgabe ist erfindungsgemäß gelöst durch ein Verfahren gemäß Anspruch 1, die Verwendung einer Knetmasse gemäß Anspruch 9 sowie ein Set gemäß Anspruch 10. Erfindungsgemäß wurde erkannt, dass Knetmasse zum Dekorieren einer glatten Fläche geeignet ist. Die glatte Fläche ist eine transparente Fläche. Als glatte Fläche dient insbesondere eine Glasscheibe oder Fensterscheibe. Eine transparente Fläche im Sinne der Erfindung kann auch ein Spiegel sein. Als glatte Flächen eignen sich beispielsweise auch Fliesen oder Porzellan. Für das erfindungsgemäße Dekorieren wird Knetmasse bereitgestellt und zu einem Dekorationsobjekt geformt. Knetmasse kann besonders unkompliziert und intuitiv verarbeitet werden. Insbesondere ist eine manuelle Verarbeitung durch Kneten und Formen sehr einfach möglich. Die Herstellung eines Dekorationsobjekts aus der Knetmasse ist unmittelbar und insbesondere auch für Kinder möglich. Das hergestellte Dekorationsobjekt wird an der glatten Fläche angebracht. Insbesondere ist es nicht erforderlich, das Dekorationsobjekt unmittelbar an der glatten Fläche zu formen. Das Dekorationsobjekt kann aus der Knetmasse ergonomisch vorteilhaft auf einer Arbeitsfläche, beispielsweise an einem Tisch, geformt und anschließend an der glatten Fläche angebracht werden. Die Verarbeitung der Knetmasse ist insbesondere im Wesentlichen verschmutzungsfrei. Das Verfahren ist unkompliziert. Die verwendete Knetmasse enthält kein Wasser und trocknet deshalb an der Luft nicht aus. Das so erzeugte Dekorationsobjekt ist langlebig und insbesondere im Wesentlichen keiner Alterung unterworfen. Da die Knetmasse kein Lösungsmittel enthält, ist sie gesundheitlich unbedenklich. Die Knetmasse enthält im Wesentlichen Wachs, Öl und Stärke.

Überraschend wurde gefunden, dass besondere, ästhetisch ansprechende Lichteffekte bei Sonneneinstrahlung auftreten, wenn das Dekorationsobjekt an einer Fensterscheibe angebracht ist. Das Dekorationsobjekt wird von der Sonne hinterleuchtet. Das Dekorationsobjekt kann insbesondere strukturiert und dreidimensional geformt sein. Eine im Wesentlichen flächige Ausgestaltung, wie bei einem Fenstermalbild, ist auch möglich. Die Knetmasse ermöglicht aber auch die gezielte Herstellung von Erhebungen und Vertiefungen und anderen 3-dimensional geformten Konturen. Die Gestaltungsvielfalt gegenüber Fenstermalfarben ist erhöht.

Das Verfahren, bei dem das Dekorationsobjekt von der transparenten Fläche abgenommen und als Knetmasse zum erneuten Dekorieren einer transparenten Fläche wiederverwendet wird, ist effizient und wirtschaftlich. Es ist ohne weiteres möglich, das Dekorationsobjekt von der transparenten Fläche abzunehmen und wieder zu verwenden. Insbesondere ist das Abnehmen des Dekorationsobjekts im Wesentlichen verunreinigungsfrei möglich. Der Reinigungsaufwand der transparenten Fläche nach dem Abnehmen des Dekorationsobjekts ist insbesondere gegenüber Fenstermalfarben reduziert.

Ein flächiges Anordnen der Knetmasse beim Formen gemäß Anspruch 2 ermöglicht ein vereinfachtes Verarbeiten. Insbesondere ist es denkbar, ein Ausrollen der Knetmasse manuell mit einem Nudelholz durchzuführen. Es ist grundsätzlich auch denkbar, das Ausrollen der Knetmasse maschinell und insbesondere automatisiert, durchzuführen.

Die Verwendung einer Unterlage gemäß Anspruch 3 ermöglicht eine vorteilhafte Verarbeitung der Knetmasse.

Ein Erzeugen einer Außenkontur gemäß Anspruch 4 ermöglicht die Erzeugung von Dekorationsobjekten mit definierter Erscheinungsform. Insbesondere kann ein Ausstechen von Dekorationsobjekten maschinell, wiederholgenau und insbesondere automatisiert durchgeführt werden.

Ein Verfahren gemäß Anspruch 5 ermöglicht die vorteilhafte Verwendung der Unterlage auch für den Transport des Dekorationsobjekts. Der Transport von der Arbeitsfläche, auf der das Dekorationsobjekt geformt worden ist, zu der glatten, insbesondere transparenten Fläche, ist mittels der Unterlage, die insbesondere Backpapier ist, vereinfacht möglich.

Ein Verfahren nach Anspruch 6 vereinfacht das Anbringen des Dekorationsobjekts an der transparenten Fläche. Während des Anbringens des Dekorationsobjekts kann die Unterlage am Dekorationsobjekt verbleiben und erst anschließend abgezogen werden. Während des Anbringens des Dekorationsobjekts an der transparenten Fläche ist das Dekorationsobjekt durch die Unterlage geschützt. Eine Verunreinigung oder Beschädigung ist vermieden.

Alternativ ist es möglich, die Unterlage von dem Dekorationsobjekt nach dessen Formung abzuziehen und das Dekorationsobjekt anschließend mit der Unterseite, mit der es auf der Unterlage aufgelegen war, an der transparenten Fläche anzubringen. Bei dieser Variante ist es insbesondere möglich, die dreidimensional geformte Kontur eines Dekorationsobjekts zu bewahren.

Ein Verfahren gemäß Anspruch 7 vereinfacht die Anbringung des Dekorationsobjekts an der transparenten Fläche. Dadurch, dass das Dekorationsobjekt durch Selbsthaftung an der transparenten Fläche gehalten ist, sind zusätzliche Haltemittel, insbesondere Klebstoff, entbehrlich. Die Selbsthaftung der Knetmasse wurde überraschend gefunden, wodurch sich die Eignung der Knetmasse zu Dekorationszwecken der transparenten Fläche noch verbessert.

Die Verwendung einer wasserfreien Knetmasse gemäß Anspruch 9 weist im Wesentlichen die Vorteile des erfindungsgemäßen Verfahrens auf, worauf hiermit verwiesen wird. Überraschend wurde gefunden, dass sich Knetmasse als Dekorationsobjekt verwenden lässt.

Ein Set gemäß Anspruch 10 ermöglicht die Durchführung des erfindungsgemäßen Verfahrens. Das Set umfasst wasserfreie Knetmasse und mindestens ein Werkzeug zum Formen der Knetmasse zu einem Dekorationsobjekt. Ein Werkzeug kann beispielsweise ein Ausstech-Werkzeug sein. Es kann auch ein Ausschneide-Werkzeug sein, wobei eine scharfkantige Schneide aufgrund der Konsistenz der Knetmasse nicht erforderlich ist. Eine Verletzungsgefahr besteht nicht. Das Set ist kindgerecht. Ein Ausstech-Werkzeug ist beispielsweise eine Ausstech-Form, wie sie zum Ausstechen von Keksen verwendet werden kann. Es kann zusätzlich ein Ausroll-Werkzeug in Form eines Nudelholzes vorgesehen sein. Das Set kann vorteilhafterweise auch die Unterlage in Form von Backpapier aufweisen. Die Knetmasse ist insbesondere nicht lufttrocknend, enthält also kein Wasser. Die Knetmasse ist lösungsmittelfrei und ist aus einer Mischung aus Wachs, Öl und Stärke hergestellt.

Weitere vorteilhafte Ausgestaltungen, zusätzliche Merkmale und Einzelheiten der Erfindung ergeben sich aus der nachfolgenden Beschreibung eines Ausführungsbeispiels.

Ein Set zum Dekorieren einer Fensterscheibe als glatte, transparente Fläche umfasst mehrere Stränge von Knetmasse. Insbesondere sind verschieden farbige Stränge, insbesondere weiß, gelb, orange, rot, braun, grün und blau vorgesehen.

Zusätzlich sind in dem Set verschiedene Werkzeuge zum Formen der Knetmasse vorgesehen. Das Set umfasst ein Roll-Werkzeug zum Ausrollen der Knetmasse. Das Roll-Werkzeug kann beispielsweise ein Nudelholz oder im einfachsten Fall eine Zylinderrolle sein. Zum Formen und Schneiden können verschiedene Schneid- und Stempel-Werkzeuge vorgesehen.

Zum Ausstechen sind mehrere, insbesondere zehn, Ausstech-Werkzeuge vorgesehen. Die Aussteck-Werkzeuge weisen beliebte Motive auf. Beispielsweise können die Ausstech-Werkzeuge die Kontur eines stilisierten Tieres, insbesondere eines Pferdes, eines Hundes oder anderer Tiere aufweisen. Es sind auch andere Tier- oder Pflanzen-Motive denkbar. Die Ausstech-Werkzeuge können auch gegenständliche Motive, wie Autos, Häuser oder andere Gegenstände umfassen. Die Ausstech-Werkzeuge können auch abstrakte Formen darstellen.

Mit dem Set können verschiedene Dekorationsobjekte hergestellt werden. Insbesondere kann die Knetmasse zur Herstellung des Dekorationsobjekts verwendet werden.

Um das Dekorationsobjekt herzustellen, wird die Knetmasse auf der Unterlage mit dem Roll-Werkzeug ausgerollt. Anschließend wird ein Motiv mit dem Ausstech-Werkzeug ausgestochen, um den Grundkörper eines Tiermotivs abzubilden. Das so aus Knetmasse in einer ersten Farbe hergestellte Tiermotiv kann anschließend durch die Verwendung weiterer Knetmassen-Stränge optimiert werden, indem beispielsweise Details des Tierkörpers, insbesondere Körperteile und Gesicht, ergänzt werden. Es sind vielfarbige und dreidimensional gestaltete Dekorationsobjekte möglich.

## Patentansprüche

1. Verfahren zum Dekorieren einer glatten Fläche umfassend die Verfahrensschritte
- Bereitstellen von wasserfreier Knetmasse, wobei die Knetmasse Wachs, Öl und Stärke enthält und gesundheitlich unbedenklich ist,
- Formen der Knetmasse zu einem Dekorationsobjekt,
- Anbringen des Dekorationsobjekts an der glatten Fläche, die transparent ist,
- Abnehmen des Dekorationsobjekts von der transparenten Fläche,
- Wiederverwenden des Dekorationsobjekts als Knetmasse zum erneuten Dekorieren einer transparenten Fläche.

2. Verfahren gemäß Anspruch 1, **dadurch gekennzeichnet, dass** das Formen der Knetmasse ein flächiges Anordnen der Knetmasse, insbesondere ein Ausrollen der Knetmasse.

3. Verfahren gemäß Anspruch 2, **dadurch gekennzeichnet, dass** die Knetmasse auf einer, insbesondere nichthaftenden, Unterlage, insbesondere Backpapier, ausgerollt wird.

4. Verfahren gemäß Anspruch 2 oder 3, **dadurch gekennzeichnet, dass** das Formen der Knetmasse ein Erzeugen einer Außenkontur des Dekorationsobjekts umfasst, insbesondere das Ausstechen und/oder Ausschneiden aus der ausgerollten Knetmasse.

5. Verfahren gemäß einem der vorstehenden Ansprüche, **dadurch gekennzeichnet, dass** zum Anbringen an der glatten, insbesondere transparenten Fläche das Dekorationsobjekt auf der Unterlage transportiert wird.

6. Verfahren gemäß Anspruch 5, **dadurch gekennzeichnet, dass** die Unterlage nach dem Anbringen des Dekorationsobjekts an der transparenten Fläche von dem Dekorationsobjekt entfernt, insbesondere abgezogen, wird.

7. Verfahren gemäß einem der vorstehenden Ansprüche, **gekennzeichnet durch** Selbsthaftung des Dekorationsobjekts an der transparenten Fläche.

8. Verfahren gemäß einem der vorstehenden Ansprüche, **dadurch gekennzeichnet, dass** die transparente Fläche als Glasscheibe, Fensterscheibe oder Spiegel ausgeführt ist.

9. Verwendung einer wasserfreien Knetmasse für ein Dekorationsobjekt zum Dekorieren einer glatten und transparenten Fläche, wobei die Knetmasse Wachs, Öl und Stärke enthält und gesundheitlich unbedenklich ist.

10. Set zum Dekorieren einer glatten und transparenten Fläche nach einem der Ansprüche 1 bis 8 umfassend
- eine wasserfreie Knetmasse, die Wachs, Öl und Stärke enthält und gesundheitlich unbedenklich ist,
- mindestens Werkzeug zum Formen der Knetmasse zu einem Dekorationsobjekt.
